# EUROPEAN PATENT SPECIFICATION

(11) **EP 4 385 310 B1**
(45) Date of publication and mention of the grant of the patent: **24.09.2025**
(21) Application number: 22213824.0
(22) Date of filing: 15.12.2022
(51) Int. Cl.: A01D 89/00, A01F 15/10

(54) **A HEADER**
HEADER
TETE

(43) Date of publication of application: 19.06.2024
(73) Proprietor: CNH Industrial Belgium N.V., 8210 Zedelgem (BE)
(72) Inventor: Blancke, Jeffrey, 8720 Markegem (BE); Beelaert, Simon, 9991 Adegem (BE); Demon, Frederik, 8310 Sint-Kruis (BE); Van Belleghem, Stijn, 9990 Maldegem (BE)
(74) Representative: CNH Industrial IP Department

(56) References cited:
- EP-B1- 1 611 781
- US-A- 4 171 606
- US-A- 5 916 116
- US-A1- 2011 299 083
- US-A1- 2020 041 340

## Description

### TECHNICAL FIELD

The present invention relates to a header such as a pickup assembly for an agricultural harvester such as a forage harvester.

### BACKGROUND

Certain agricultural machines, such as forage harvesters, forage wagons, mergers, and balers, collect crop material that has been cut from a field. The component of such agricultural machines which gathers the crop material and feeds it further into the machine for subsequent processing is generally known as a pickup assembly. The subsequent processing may, for example, involve baling, threshing, chopping, storing and/or depositing.

To this end, a pickup assembly is usually provided with a pickup unit, a guiding element and a feeding auger. The pickup unit is typically in the form of a pickup drum rotatably mounted on the pickup assembly frame. The pickup drum has radially arranged projecting tines to collect the crop material and propel it upwards, past the guiding element, and then into the feeding auger that moves the crop laterally towards a feed channel through which the crop material is conveyed into the machine for subsequent processing. The guiding element is generally referred to as a wind guard, and serves the purposes of restricting the movement of the collected crop material in the forward and upward direction, shielding the crop flow path from wind influence and guiding the crop material efficiently into the feed channel.

The pickup assembly is supported by a frame, which in turn is supported above the ground by way of one or more, typically two or four, wheels. The wheels are provided for engaging the ground as the agricultural machine is driven across the hill. When height adjustable, the wheels are often called gauge wheels and may assist in maintaining the pickup assembly at a suitable height for gathering crop. However, when the machine passes over uneven ground surfaces and/or over ground surface with an otherwise unexpected composition, the wheels and the pickup assembly frame may start bouncing and it can be difficult to keep the pickup assembly at a constant height. The interaction between the gauge wheels and the ground can thus undesirably influence the ability of the pickup assembly to gather crops. In some instances, where the characteristics of the ground are particularly unusual, this can result in an unacceptable quantity of crop being gathered up by the pickup assembly or stones taken in. Furthermore, unexpected vertical movement of the frame may cause the tines of the pickup drum to dig into the ground. US 2020/041340 discloses a header of the known make.

It is an aim of the present invention to address the one or more disadvantages associated with this prior art.

### SUMMARY OF THE INVENTION

According to an aspect of the invention there is provided an agricultural harvester comprising a header with a pickup mechanism for picking up crop from a field and a feeder for feeding the crop into the agricultural harvester for further processing. The feeder is pivotably connected to a chassis of the agricultural harvester via at least one lift cylinder. The header is connected to the feeder for pivoting therewith and comprises a pickup mechanism supported by a frame. The header further comprises at least one wheel for supporting the frame on the ground. A sensor is configured to detect a ground surface composition in an area behind the pickup mechanism, while a control system is operably coupled to the at least one lift cylinder and the sensor, and configured to operate the at least one lift cylinder to adjust a pressure that the header exerts on the ground in dependence of the detected ground surface composition.

The inventors have observed that when the ground that an agricultural vehicle is passing over is, e.g., too soft or too hard, the header can be ineffective at collecting crop. For example, when the ground is too soft and/or wet (e.g. from rain), the header is observed to sink too much into the ground, whereas when the ground is too hard and/or uneven (e.g. from drought or a stony composition), the header is observed to bounce unsteadily over the ground. In both cases, the ability to pick up crop is affected due to the positioning of the header with respect to the ground. The invention overcomes this by adjusting the pressure applied to the header by the at least one lift cylinder in response to detecting specific ground surface compositions in an area behind the pickup mechanism, thereby steadying the header over the ground surface composition, and thus improving the header's ability to collect crop thereon. Since the sensor is arranged to detect ground rearward of the pickup mechanism, the header can adapt to new terrain as it proceeds.

The term 'ground surface composition' herein refers to characteristics of the ground that the header has just passed over. The ground surface composition may, e.g., relate to the shape of the ground itself - such as, an irregularity in the ground such as tyre tracks defined therein or a field border when driving to close to the edge of the field - or it may relate to the presence of something unexpected on it - for example, an irregular pattern of left-over crop on the ground.

When the detected ground surface composition, e.g., comprises an irregular pattern of left-over crop on the ground, it indicates that the header has passed over a section of crop but has failed to collect it uniformly. This is often because the ground is hard or stony or dry or uneven such that the header bounces along the ground as it passes thereover. When the header bounces unsteadily, this may cause the tines of the pickup drum to be dug into the ground. Accordingly, the header is unable to pick up the crop on the ground uniformly, and an irregular pattern of left-over crop is left behind. The control system is preferably configured to operate the at least one lift cylinder to adjust the pressure that the header exerts on the ground in dependence of the detected irregular pattern of left-over crop on the ground. For example, by decreasing the pressure on the ground, the bouncing of the header on the hard or stony or dry or uneven ground may be reduced, and hence the header collects the crop more effectively, the tines are not dug into the ground and stones are not taken into the header. The need to pass over the same ground again with the header is reduced significantly.

When the detected ground surface composition, e.g., comprises tyre tracks in the ground, these are often caused by the wheel(s) of the header and/or the agricultural vehicle. This typically occurs when the ground is soft or wet. This is because when the ground is soft or wet, the tyres are sunk more into the ground and tracks or impressions thereof are left behind. In these conditions, when the wheels are lower, the header is unable to collect crop at the correct height. For example, the tines of the pickup mechanism may dug into the ground, which can lead to damage to the pickup mechanism and a failure to pick all crop material up from the field. Further, this may lead to sand and other non-crop material to be taken in, thereby contaminating the volume of harvested crop and possibly damaging the machine. The control system is preferably configured to operate the at least one lift cylinder to adjust the pressure that the header exerts on the ground in dependence of detected tyre tracks in the ground. For example, by reducing the downward pressure on the ground, the tyre may sink less into the field, and the header is able to collect crop more effectively.

In an embodiment, the header may further comprise at least one height adjustment actuator, coupled between the at least one wheel and the frame for adjusting a height of the pickup mechanism relative to the ground. Such height adjustment actuators may be manually operable. Alternatively, the height adjustment actuators can be controlled electrically or hydraulically from the driver cabin, preferably while harvesting. By providing an optimal combination of the height of the pickup mechanism and the pressure exerted on the ground by the header in dependence of the detected ground surface composition, a more efficient and effective pickup of the crop from the field can be realised.

The at least one wheel for supporting the frame on the ground may comprise a front wheel and/or a rear wheel. With the rear end of the header being carried by the feeder of the agricultural harvester, the frame of some embodiments of the header according to the invention may be supported by just two front wheels. Larger and heavier headers may further comprise one or more, preferably two, rear wheels for properly supporting the header frame on the ground.

Preferably, the sensor is arranged close to or on the header. The sensor may be arranged on the frame, preferably on the rearward portion thereof. Alternatively, the sensor may be arranged on the feeder or on a chassis part of the agricultural harvester, at a position that offers a good view on the ground surface in the relevant area behind the pickup mechanism.

Preferably, the sensor is a LIDAR sensor, a radar sensor, an ultrasound sensor, or a camera such as an infrared camera or a stereo camera. The sensor can be of any type of camera that is suitable for detecting differences in the ground, crop and/or stubble.

The lift cylinder is preferably a hydraulic cylinder but may also be an adjustable pneumatic cylinder, spring, damper, actuator coupling, or a combination of such elements.

The header may, e.g., be a pickup assembly or a corn header. The agricultural vehicle may be a harvester such as a forage harvester, a combine harvester, a baler, or a merger.

### BRIEF DESCRIPTION OF THE DRAWINGS

Embodiments of the invention will now be described by way of example with reference to the accompanying drawings, in which:
Figures 1 and 2 schematically show a forage harvester with a header that may embody one or more of the inventions described herein.
Figure 3 shows a cross section of the header of Figure 1 or 2.
Figure 4 shows a perspective rear view of the header of Figure 1 or 2.
Figure 5 shows a schematic representation of a control system for controlling the header of Figure 1 or 2.

### DETAILED DESCRIPTION

In the following, a header is described in which the above-described invention may be advantageously used. The directions up, down, forward, and rearward are herein defined relative to the general orientation and direction of an agricultural harvester and the header driving over a field and collecting crop.

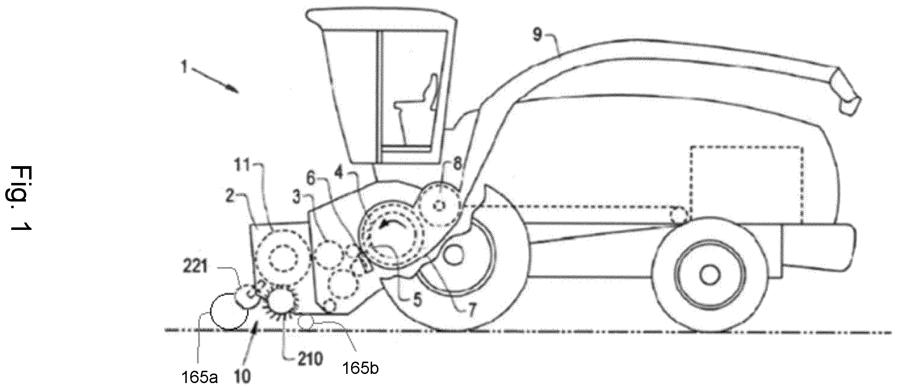

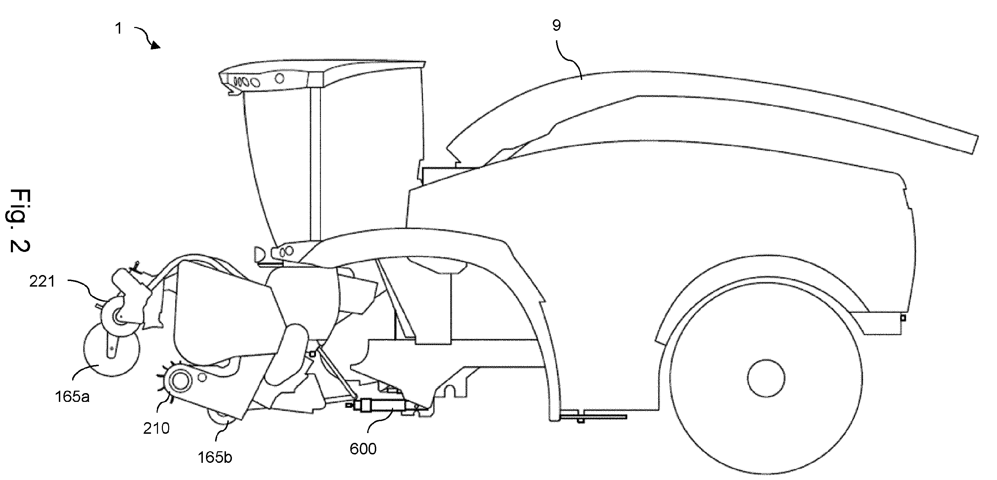

Figures 1 and 2 show a schematic side view of an exemplary embodiment of an agricultural harvester, illustrated in the form of a forage harvester 1. As the harvester 1 advances through a field, crops, e.g. grass or alfalfa, are gathered by a header in the form of a pickup assembly 2 and transported to a central crop inlet of the forage harvester 1 where they enter the harvester 1 through a set of feed rolls 3. The feed rolls 3 guide the crops in the form of a mat with a given thickness towards the cutting drum 4, which rotates in the direction indicated by the arrow, about a rotation axle that is transversal to the direction of movement of the crops. Knives 5 are mounted on and distributed along the full circumference of the drum 4, so that the knives 5 pass by a stationary shear bar 6 as the drum 4 rotates, thereby chopping the crops into small pieces which are further transported between the cutting drum 4 and a concave 7. The chopped material is then ejected by a blower 8 through a spout 9. It should be appreciated that while the agricultural vehicle is illustrated and described as a forage harvester 1, in some embodiments the pickup assembly 2 may be used in combination with other agricultural vehicles such as a merger or a baler, e.g., a large square baler, a small square baler, or a round baler.

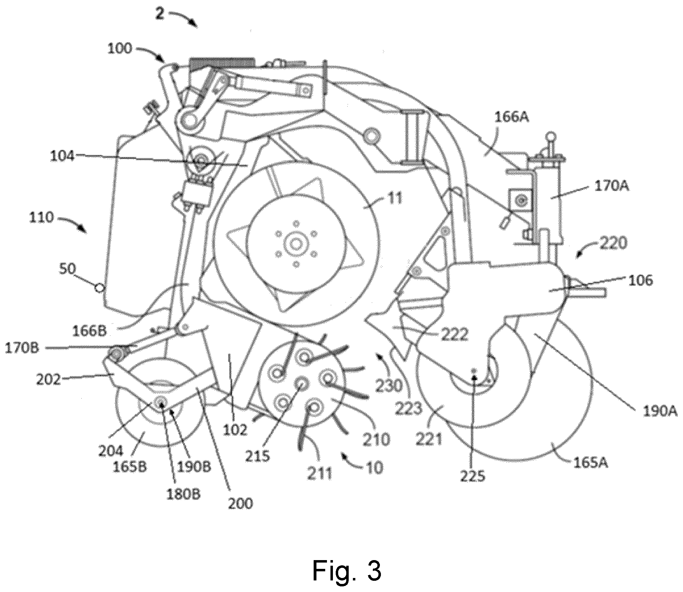

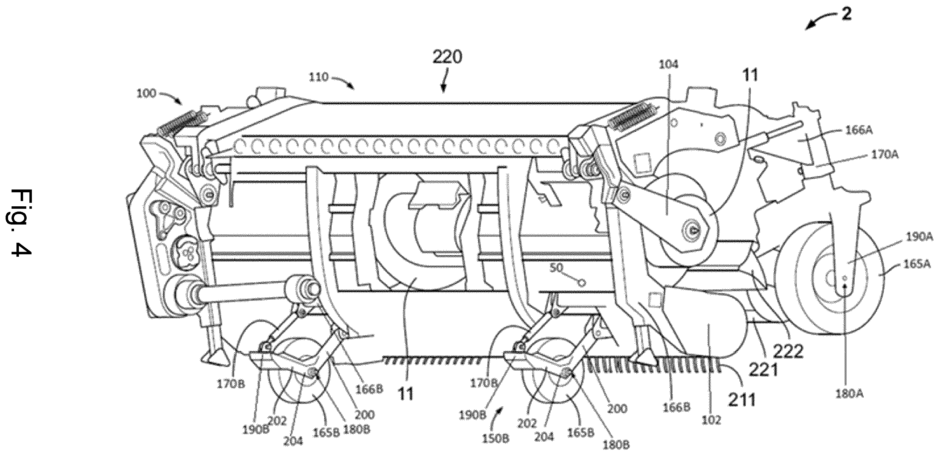

Figures 3 and 4 show the pickup assembly 2 for the forage harvester 1 in further detail. The pickup assembly 2 is provided with a pickup assembly frame 100 that supports a pickup mechanism 110 which picks up or collects crop from the ground and directs it into an inlet of the harvester 1, as the pickup assembly 2 is driven over the ground by the forage harvester 1. When harvesting, the pickup assembly frame 100 is connected to the feeder of the forage harvester 1. The feeder is pivotably connected to a chassis of the forage harvester 1 via one or more adjustable lift cylinders 600.

To support the frame 100 - and hence the pickup mechanism 110 - at the right height above the ground for collecting crop from the ground, the pickup assembly 2 is provided with at least one wheel 165A, 165B. The or each wheel 165A, 165B is provided for supporting the frame 100 on the ground. The possibility to adjust the one or more lift cylinders 600 allows the frame 100 of the pickup assembly 2 to exert varying degrees of pressure (or suspension) on the wheels 165A, 165B and hence the ground. The at least one lift cylinder 600 is preferably realised in the form of a hydraulic cylinder, but may also take the form of, e.g., an adjustable pneumatic cylinder, spring, damper, actuator coupling, or any suitable combination of such elements.

The pickup assembly 2 is further provided with a sensor 50 configured to detect a ground surface composition in an area behind the pickup mechanism 110. The term 'ground surface composition' herein refers to characteristics of the ground that the pickup assembly 2 has just passed over. The ground surface composition may, e.g., relate to the shape or configuration of the ground itself - for example, tyre tracks or drought cracks defined in the ground. Likewise, the ground surface composition may relate to the presence of something unexpected on it - for example, an irregular pattern of left-over crop on the ground or to a distribution of pebbles or rocks on the ground. To this end, the sensor 50 is preferably arranged on the pickup assembly, and the sensor 50 takes an image of the area behind the pickup mechanism 110 and recognises the ground surface composition based on an analysis of the taken image.

The pickup assembly 2 further comprises a control system 500 operably coupled to the or each lift cylinder 600 and the sensor 50. The control system 500 is configured to operate or control the or each controllable lift cylinder 600 to adjust, i.e., increase or decrease, the pressure that the frame 100 of the pickup assembly 2 exerts on the ground in dependence of a ground surface composition detected by the sensor 50. In this way, as will now be explained, the control system 500 can ensure that the pickup assembly 2 collects crop more effectively when passing over different types of ground.

In more detail, this invention has been conceived out of the inventors' discovery that the type of ground that a harvester 1 is passing over can have an undesirable impact on the pickup assembly's ability to collect crop. When the harvester 1 is passing over ground that is too soft and/or wet (e.g. because it has recently rained), the pickup assembly 2 sinks too much into the ground, and the pickup assembly 2 is arranged too low with respect to the crop. Consequently, the tines 211 of the pickup unit 10 may dug into the ground, which can lead to damage to the pickup unit 10 and a failure to pick all crop material up from the field. Further, this may lead to sand and other non-crop material to be taken in, thereby contaminating the volume of harvested crop and possibly damaging the machine. When the harvester 1 is passing over ground that is too hard and/or uneven (e.g. from drought or a stony composition of the ground), the pickup assembly 2 has been observed to sometimes bounce along the ground, thereby compromising the ability of the pickup assembly 2 to pick up the crop uniformly. When the header bounces unsteadily, this can also cause the tines of the pickup drum to be dug into the ground. Also, when the pickup assembly 2 collects the crop irregularly, it may sometimes be necessary to pass the harvester 1 back over the same area of ground in order to collect the crop that was not gathered during the first pass over.

By adjusting the pressure on the wheels 165A, 165B in dependence of the detected ground surface composition, the invention is able to avoid the aforementioned unwanted and undesirable consequences associated with the ground surface composition. For example, when the ground is soft and/or wet, it is advantageous to reduce the downward pressure of the frame 100 on the ground. This is because such a reduction in downward pressure causes the wheels 165 to be sunk less into the ground, and the frame 100 - and hence the pickup mechanism 110 - can be maintained at the right height above the ground for collecting crop effectively. Meanwhile, when the ground is hard and/or uneven, it is advantageous also to reduce the downward pressure of the frame 100 on the ground. This is because such a reduction in downward pressure reduces the intake of stones on the hard or stony or uneven ground, and so the pickup assembly 2 can gather up crop more uniformly and the tines do not dig into the ground. For ground that is neither too soft/ wet nor too hard/ uneven - i.e. for ground with "normal" or average hardness and flatness - it may be advantageous to increase the downward pressure of the frame 100 on the ground since it increases grip and allows for a smoother intake of crop at higher speeds for the pickup assembly 2. In sloping fields it can be advantageous to increase the pressure too, because the increased pressure may improve the ground following behaviour of the pickup mechanism.

In this way, suspension control of the header frame 100 can be used to ensure the pickup assembly 2 effectively collects crop over changes in the ground of a field.

More details about the pickup assembly 2 will now be provided. Firstly, the pickup mechanism 110 will be described in more detail.

As shown in Figures 3 and 4, the pickup mechanism 110 is made up of a pickup unit 10, a crop material conveyor in the form of a feeding auger 11, and a wind guard assembly or guiding element 220.

The pickup unit 10 is configured to pick up crop from the ground and includes a pickup drum 210 that carries a plurality of tines 211 to this end. The unit 10 comprises a pickup unit frame 102 and a pickup drum 210 that is rotatably mounted on the pickup unit frame 102. To this end, the pickup unit frame 102 is provided with a pickup axle 215 that extends transversely to the direction of movement of the harvester 1, and the pickup drum 210 is configured to rotate about the pickup axle 215. The tines 211 of the pickup unit 10 are radially arranged projecting tines 211. As the pickup drum 210 rotates, the rotating tines 211 pick crop material up from the ground and move it towards the feeding auger 11. The feeding auger 11, which is supported by a feeding auger frame 104 above the pickup drum 210, then conveys the picked up crop material towards an inlet of the harvester 1 - or to a central location where a separate conveyor conveys the crop material toward the interior of the harvester 1 - for subsequent processing.

The pickup assembly 2 also includes the wind guard assembly 220 for restricting the movement of the crop picked up by the pickup unit 10 in the forward and upward direction, shielding the crop flow path from wind influence and guiding the crop material efficiently towards the feeding auger 11 and into the inlet of the harvester 1. To this end, the wind guard assembly 220 is provided with a wind guard frame 106 and a cylindrical roller 221 rotatably mounted on the wind guard frame 106. To this end, the wind guard frame 106 is provided with a roller axle 225 that extends transversely to the direction of movement of the harvester 1, and the cylindrical roller 221 is configured to rotate about the roller axle 225 during operation. It should be appreciated that while the roller 221 is illustrated and described as a cylindrical roller 221, the roller 221 can be formed to have other shapes. The roller 221 may be a fixed roller, i.e., a roller that generally maintains a fixed position of the roller axis 225 during operation, or an adjustable roller, i.e., a roller that can be appreciably re-positioned so the roller axis 225 moves to accommodate for variations swath height. The wind guard roller 221 is followed by guidance plate 222 thereabove.

In this way, an infeed channel 230 for crop is formed between the wind guard roller 221 and an infeed channel surface 223 of the guidance plate 222 on one side and the pickup drum 210 with its tines 211 on the other side.

Now that the pickup mechanism 110 has been described, more details about the pickup assembly frame 100 will be provided.

The pickup assembly frame 100 supports all components of the pickup mechanism 110 and other functional parts of the pickup assembly 2. The pickup assembly frame 100 comprises a forward portion 166A located towards the foremost side of the pickup assembly 2, and a rearward portion 166B located towards the rearmost side of the pickup assembly 2. The pickup unit frame 102 that supports the pickup unit 10 and the feeding auger frame 104 that supports the feeding auger 11 are both mounted on the rearward portion 166B of the pickup assembly frame 100. Meanwhile, the wind guard frame 106 that supports the wind guard assembly 220 is pivotably coupled to the forward portion 166A of the pickup assembly frame 100. This allows the wind guard assembly 220 to be pivoted away from the other components of the pickup mechanism 110. In other embodiments, the wind guard assembly 220 is mounted on the forward portion 166A of the pickup assembly frame 100.

The frame 100 may include a coupling mechanism (not shown) for releasably mounting the pickup assembly 2 to the harvester 1 when needed, or else it may be fixedly attached to the feeder of the harvester 1.

As best appreciated from Figure 3, the pickup assembly 2 is provided with two front wheels 165A for supporting the forward portion 166A of the frame 100 on the ground. The front wheels 165A are arranged at the fore of the wind guard assembly 220, and at respective lateral ends of the wind guard assembly 220, at the extremities thereof. Each front wheel 165A is rotatably arranged on a front wheel axle 180A that extends transversely to the direction of movement of the harvester 1. Each front wheel axle 180A is supported by a front wheel support 190A.

A front height adjustment actuator 170A may be coupled between each front wheel 165A and the frame 100 for adjusting a height of the pickup mechanism 110 relative to the ground. Such height adjustment actuators 170A may be manually operable. Alternatively, the height adjustment actuators 170A can be controlled electrically or hydraulically from the driver cabin, preferably while harvesting. By providing an optimal combination of the height of the pickup mechanism 110 and the pressure exerted on the ground by the header 2 in dependence of the detected ground surface composition, a more efficient and effective pickup of the crop from the field can be realised.

Likewise, the pickup assembly 2 of this embodiment is provided with two rear wheels 165B for supporting the rearward portion 166B of the frame 100 on the ground. The rear wheels 165B are arranged at the rear of the pickup unit 10, and at respective lateral ends of the pickup unit 10, between the extremities thereof. Each rear wheel 165B is rotatably arranged on a rear wheel axle 180B that extends transversely to the direction of movement of the harvester 1. Each rear wheel axle 180B is supported by a rear wheel support 190B.

Each rear wheel support 190B comprises a pair of wheel arms in the form of a fore wheel arm 200 and a rear wheel arm 202. Each rear wheel support 190B is directly attached to the rearward portion 166B of the pickup assembly frame 100 at an end of the fore wheel arm 200 opposite the bend 204 and to a rear height adjustment actuator 170B at an end of the rear wheel arm 202 opposite the bend 204. Each rear height adjustment actuator 170B is also attached to the rearward portion 166B of the pickup assembly frame 100 at a position spaced away from the connection of the fore wheel arm 200 to the rearward portion 166B. Preferably, all of these attachments are pivotable. Each rear wheel axle 180B is mounted on the rear wheel support 190B proximate to the bend 204. The rear height adjustment actuators 170B are thus arranged between the rearward portion 166B of the frame 100 - which supports the pickup unit 10 - and the rear wheels 165B. In this way, each rear height adjustment actuator 170B can control the height of the rearward portion 166B of the pickup assembly 2 relative to the ground.

Now more details about the sensor 50 will be provided.

As stated above, the sensor 50 is configured to detect a ground surface composition in an area behind the pickup mechanism 110. In this way, the sensor 50 can ascertain whether the ground that the harvester is passing over is different to the ground before. When such a ground surface composition is detected, the sensor 50 outputs a sensor output to the control system 500 which controls the pressure that the frame 100 exerts on the ground in dependence of the output signal. Since the sensor 50 is arranged to detect the ground rearward of the pickup assembly 2, the pickup assembly 2 can adapt to a changing ground surface as it is driven along. To detect the ground rearward of the pickup assembly 2, the sensor is preferably mounted on the rearward portion 166B of the frame 100 and is preferably arranged to face away from the pickup assembly 2 and down towards the ground.

The sensor 50 is preferably configured to detect tyre tracks or impressions in the ground, e.g. that have been left from the wheels 165 passing thereover. Such tracks are left when the ground is soft, and in particular when the ground is soft and wet. In other embodiments, the sensor 50 may be configured to detect crop left behind.

The sensor 50 is also preferably configured to detect an irregular pattern of left-over crop on the ground. This is because such an irregular pattern indicates that the pickup assembly 2 has passed over the crop but has failed to collect it uniformly. This often occurs when the ground is hard or uneven, and the pickup assembly 2 is caused to bounce along the ground as it passes thereover. In other embodiments, the sensor 50 may be configured to detect stones or pebbles in the ground, drought cracks in the ground

To this end, the sensor 50 may be any type of sensor that is capable of detecting the above-stated differences in ground, crop and stubble about the pickup assembly 2. To this end, the sensor 50 may be a LIDAR sensor, a radar sensor, an ultrasound sensor, or a camera such as an infrared camera or a stereo camera.

Preferably, the sensor 50 is arranged close to or on the header 2. The sensor 50 may be arranged on the frame 100, preferably on the rearward portion 166B thereof. Alternatively, the sensor 50 may be arranged on the feeder or on a chassis part of the agricultural harvester 1, at a position that offers a good view on the ground surface in the relevant area behind the pickup mechanism 110.

Finally, more information about the control system 500 will be provided.

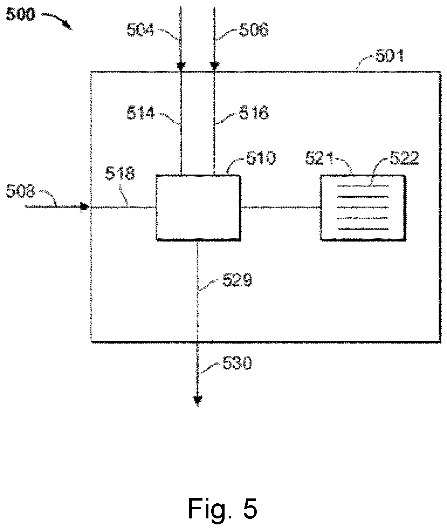

The control system 500 controls the pressure that the frame exerts on the ground in dependence of the output signal from the sensor 50. The control system 500 is shown in Figure 5.

The control system 500 may comprise one or more controllers 501 configured to receive an input signal 504 indicative of a ground surface composition in an area behind the pickup mechanism. The input signal 504 may be provided, for example, by the sensor output of the sensor 50 described above. The input signal 504 may be used to determine a desired pressure in the at least one lift cylinder 600 in dependence of the ground surface composition. The control system 500 may then issue a control signal 530 to control the at least one lift cylinder 600 to adjust if needed, i.e., increase or decrease, the pressure that the frame 100 exerts on the ground.

The control system 500 may be configured to receive one or more further input signals 506, 508 indicative of, for example, a mode of operation of the pickup assembly 2, or a current pressure in the at least one lift cylinder 600.

The or each controller 501 comprises at least one electronic processor 510 having one or more electrical input(s) 514, 516, 518 for receiving one or more of input signals 504, 506, 508, and one or more electrical output(s) 529 for outputting one or more output signals 530 for receipt by the tensioning elements 170. The or each controller 501 further comprises at least one memory device 521 electrically coupled to the at least one electronic processor 510 and having instructions 522 stored therein. The at least one electronic processor 510 is configured to access the at least one memory device 521 and execute the instructions 522 thereon so as to determine the desired pressure in the at least one lift cylinder 600.

Variations on the pickup assembly 2 described above will also be apparent to the skilled person. For example, a header that can cut crop as well as collect it may be used in place of the pickup assembly 2 described above. Additionally or alternatively, the header may be a corn header. When the header is a corn header, the invention may advantageously ensure a constant stubble height. To this end, the detected ground surface composition may be a high or low stubble height, and the control system 500 may be configured to operate the at least one lift cylinder 600 to adjust the pressure that the frame 100 exerts on the ground in dependence of the detected stubble height.

### Reference numerals

- 1: Agricultural harvester/ forage harvester
- 2: Header/ pickup assembly
- 3: Feed rolls
- 4: Cutting drum
- 5: Knives
- 6: Shear bar
- 7: Concave
- 8: Blower
- 9: Spout
- 10: Pickup unit
- 11: Feeding auger
- 50: Sensor
- 100: Pickup assembly frame
- 102: Pickup unit frame
- 104: Feeding auger frame
- 106: Wind guard frame
- 110: Pickup mechanism
- 165A: Front wheel
- 165B: Rear wheel
- 166A: Forward portion
- 166B: Rearward portion
- 170A: Front height adjustment actuator
- 170B: Rear height adjustment actuator
- 180A: Front wheel axle
- 180B: Rear wheel axle
- 190A: Front wheel support
- 190B: Rear wheel support
- 200: Fore wheel arm
- 202: Rear wheel arm
- 204: Bend
- 210: Pickup drum
- 211: Tines
- 215: Pickup axle
- 220: Wind guard assembly
- 221: Cylindrical roller
- 222: Guidance plate
- 223: Channel surface
- 225: Roller axle
- 230: Infeed channel
- 500: Control system
- 501: Controller(s)
- 504: Input signal
- 506: Input signal
- 508: Input signal
- 510: Electronic processor(s)
- 514: Electrical input
- 516: Electrical input
- 518: Electrical input
- 521: Memory device(s)
- 522: Instructions
- 529: Electrical output(s)
- 530: Control signal(s)
- 600: Lift cylinder(s)

## Claims

1. An agricultural harvester (1) comprising a header (2) with a pickup mechanism (110) for picking up crop from a field and a feeder for feeding the crop into the agricultural harvester (1) for further processing, the feeder being pivotably connected to a chassis of the agricultural harvester (1) via at least one lift cylinder, the header (2) being connected to the feeder for pivoting therewith and comprising:
the pickup mechanism (110),
a frame (100) that supports the pickup mechanism (110),
at least one wheel (165A, 165B) for supporting the frame (100) on the ground, the agricultural harvester (1) further comprising:
a sensor (50) configured to detect a ground surface composition in an area behind the pickup mechanism (110), and
a control system (500) operably coupled to the at least one lift cylinder (600) and the sensor (50), wherein the control system (500) is configured to operate the at least one lift cylinder (600) to adjust a pressure that the header (2) exerts on the ground in dependence of the detected ground surface composition.

2. The agricultural harvester (1) of claim 1, wherein the ground surface composition comprises an irregular pattern of left-over crop on the ground, and wherein the control system (500) is configured to operate the at least one lift cylinder (600) to adjust the pressure that the header (2) exerts on the ground in dependence of the irregular pattern of left-over crop on the ground.

3. The agricultural harvester (1) of claim 1 or 2, wherein the ground surface composition comprises an irregularity, such as tyre tracks or a border, in the ground, and wherein the control system (500) is configured to operate the at least one lift cylinder (600) to adjust the pressure that the header (2) exerts on the ground in dependence of the irregularity.

4. The agricultural harvester (1) of any preceding claim, wherein the header further comprises at least one height adjustment actuator (170A, 170B), coupled between the at least one wheel (165A, 165B) and the frame (100) for adjusting a height of the pickup mechanism (110) relative to the ground.

5. The agricultural harvester (1) of any preceding claim, wherein the at least one wheel (165) for supporting the frame (100) on the ground comprises a front wheel (165A) and/or a rear wheel (165A).

6. The agricultural harvester (1) of any preceding claim, wherein the sensor (50) is a LIDAR sensor, a radar sensor, an ultrasound sensor, or a camera such as an infrared camera or a stereo camera.

7. The agricultural harvester (1) of any preceding claim, wherein the sensor (50) is provided on the header (2).

8. The agricultural harvester (1) of any preceding claim, wherein the agricultural harvester (1) is a forage harvester, a combine harvester, a baler, or a merger.

9. A method of controlling the at least one lift cylinder (600) of an agricultural harvester (1) as claimed in any preceding claim, the method comprising:
receiving a signal representing the detected ground surface composition in the area behind the pickup mechanism (110), and
operating the at least one lift cylinder (600) to adjust a pressure that the header (2) exerts on the ground in dependence of the detected ground surface composition.

10. A method as claimed in claim 9, wherein the detected ground surface composition comprises an irregular pattern of left-over crop on the ground, and wherein the at least one lift cylinder (600) is operated to decrease the pressure that the header (2) exerts on the ground in dependence of the irregular pattern of left-over crop on the ground.

11. A method as claimed in claim 9, wherein the detected ground surface composition comprises an irregularity, such as tyre tracks or a border, in the ground, and wherein the at least one lift cylinder (600) is operated to decrease the pressure that the header (2) exerts on the ground in dependence of the irregularity.

## Patentansprüche

1. Landwirtschaftliche Erntemaschine (1), umfassend einen Erntevorsatz (2) mit einer Pickup-Vorrichtung (110), um Erntegut von einem Feld aufzunehmen, und einer Zuführeinrichtung, um das Erntegut in die Erntemaschine (1) zur weiteren Verarbeitung einzuführen, wobei die Zuführeinrichtung mittels zumindest eines Hubzylinders schwenkbar mit dem Chassis der landwirtschaftlichen Erntemaschine (1) verbunden ist, wobei der Erntevorsatz (2) mit der Zuführeinrichtung verbunden ist, um mit dieser zu Schwenken, und umfasst:
die Pickup-Vorrichtung (110),
einen Rahmen (100), der die Pickup-Vorrichtung trägt,
mindestens ein Rad (165A, 165B), das den Rahmen (100) auf dem Boden stützt,
wobei die Erntemaschine (1) weiterhin umfasst:
einen Sensor (50), der dazu eingerichtet ist, eine Bodenzusammensetzung in einem Bereich hinter der Pickup-Vorrichtung (110) zu erfassen, und
ein Steuersystem (500), das wirkend mit dem mindestens einen Hubzylinder (600) und dem Sensor (50) verbunden ist, wobei das Steuersystem (500) dazu eingerichtet ist, den mindestens einen Hubzylinder (600) zu betätigen, um abhängig von der erfassten Bodenzusammensetzung einen Druck anzupassen, den der Erntevorsatz (2) auf den Boden ausübt.

2. Landwirtschaftliche Erntemaschine (1) nach Anspruch 1, wobei die Bodenzusammensetzung ein unregelmäßiges Muster an übrig gebliebenem Erntegut auf dem Boden umfasst, und wobei das Steuersystem (500) dazu eingerichtet ist, den mindestens einen Hubzylinder (600) zu betätigen, um abhängig von dem unregelmäßigen Muster an übrig gebliebenem Erntegut auf dem Boden den Druck anzupassen, den der Erntevorsatz (2) auf den Boden ausübt.

3. Landwirtschaftliche Erntemaschine (1) nach Anspruch 1 oder 2, wobei die Bodenzusammensetzung eine Unregelmäßigkeit in dem Boden umfasst, wie z.B. Reifenspuren oder eine Grenze, und wobei das Steuersystem (500) dazu eingerichtet ist, den mindestens einen Hubzylinder (600) zu betätigen, um abhängig von der Unregelmäßigkeit den Druck anzupassen, den der Erntevorsatz (2) auf den Boden ausübt.

4. Landwirtschaftliche Erntemaschine (1) nach einem der vorhergehenden Ansprüche, wobei der Erntevorsatz weiterhin mindestens einen Höheneinstellungs-Antrieb (170A, 170B) umfasst, der zwischen das mindestens eine Rad (165A, 165B) und den Rahmen (100) gekoppelt ist, um eine Höhe der Pickup-Vorrichtung (110) relativ zum Boden zu steuern.

5. Landwirtschaftliche Erntemaschine (1) nach einem der vorhergehenden Ansprüche, wobei das mindestens eine Rad (165A, 165B) zum Stützen des Rahmens (100) auf dem Boden ein Vorderrad (165A) und/oder ein Hinterrad (165A) umfasst.

6. Landwirtschaftliche Erntemaschine (1) nach einem der vorhergehenden Ansprüche, wobei der Sensor (50) ein LIDAR Sensor, ein Radarsensor, ein Ultraschall-Sensor, oder eine Kamera, beispielsweise eine Infrarotkamera, ist.

7. Landwirtschaftliche Erntemaschine (1) nach einem der vorhergehenden Ansprüche, wobei der Sensor (50) auf dem Erntevorsatz (2) bereitgestellt ist.

8. Landwirtschaftliche Erntemaschine (1) nach einem der vorhergehenden Ansprüche, wobei die landwirtschaftliche Erntemaschine (1) ein Feldhäcksler, ein Mähdrescher, eine Ballenpresse, oder ein Bandschwader ist.

9. Verfahren zum Steuern des mindestens einen Hubzylinders (600) einer landwirtschaftlichen Erntemaschine (1) nach einem der vorhergehenden Ansprüche, wobei das Verfahren umfasst:
Empfangen eines Signals, welches kennzeichnend ist für die erfasste Bodenzusammensetzung im Bereich hinter der Pickup-Vorrichtung (110), und
Betätigen des mindestens einen Hubzylinders (600), um abhängig von der erfassten Bodenzusammensetzung den Druck anzupassen, den der Erntevorsatz (2) auf den Boden ausübt.

10. Verfahren nach Anspruch 9, wobei die erfasste Bodenzusammensetzung ein unregelmäßiges Muster an übrig gebliebenem Erntegut auf dem Boden umfasst, und wobei der mindestens eine Hubzylinder (600) betätigt wird, um abhängig von dem unregelmäßigen Muster an übrig gebliebenem Erntegut auf dem Boden den Druck zu verringern, den der Erntevorsatz (2) auf den Boden ausübt.

11. Verfahren nach Anspruch 9, wobei die erfasste Bodenzusammensetzung eine Unregelmäßigkeit in dem Boden umfasst, wie z.B. Reifenspuren oder eine Grenze, und wobei der mindestens eine Hubzylinder (600) betätigt wird, um abhängig von der Unregelmäßigkeit den Druck zu verringern, den der Erntevorsatz auf den Boden ausübt.

## Revendications

1. Une moissonneuse agricole (1) comprenant un organe de coupe (2) avec un mécanisme de ramassage (110) pour ramasser la récolte dans un champ et un engreneur pour acheminer la récolte vers la moissonneuse agricole (1) pour un traitement ultérieur, l'engreneur étant raccordé de manière pivotante à un châssis de la moissonneuse agricole (1) par au moins un vérin de levage, l'organe de coupe (2) étant raccordé à l'engreneur pour pivoter avec celui-ci et comprenant :
le mécanisme de ramassage (110),
un châssis (100) qui soutient le mécanisme de ramassage (110),
au moins une roue (165A, 165B) pour soutenir le châssis (100) sur le sol,
la moissonneuse agricole (1) comprenant en outre :
un capteur (50) configuré pour détecter la composition de la surface du sol dans une zone située derrière le mécanisme de ramassage (110), et
un système de commande (500) couplé de manière fonctionnelle à l'au moins un vérin de levage (600) et au capteur (50), dans lequel le système de commande (500) est configuré pour actionner l'au moins un vérin de levage (600) afin d'ajuster une pression que l'organe de coupe (2) exerce sur le sol en fonction de la composition détectée de la surface du sol.

2. La moissonneuse agricole (1) selon la revendication 1, dans laquelle la composition de la surface du sol comprend un motif irrégulier de résidus de culture sur le sol, et dans laquelle le système de commande (500) est configuré pour actionner l'au moins un vérin de levage (600) afin d'ajuster la pression que l'organe de coupe (2) exerce sur le sol en fonction du motif irrégulier des résidus de culture sur le sol.

3. La moissonneuse agricole (1) selon la revendication 1 ou la revendication 2, dans laquelle la composition de la surface du sol comprend une irrégularité, comme des traces de pneus ou une bordure, dans le sol, et dans laquelle le système de commande (500) est configuré pour actionner l'au moins un vérin de levage (600) afin d'ajuster la pression que l'organe de coupe (2) exerce sur le sol en fonction de l'irrégularité.

4. La moissonneuse agricole (1) selon l'une quelconque des revendications précédentes, dans laquelle l'organe de coupe comprend en outre au moins un actionneur de réglage de hauteur (170A, 170B), couplé entre l'au moins une roue (165A, 165B) et le châssis (100) pour ajuster une hauteur du mécanisme de ramassage (110) par rapport au sol.

5. La moissonneuse agricole (1) selon l'une quelconque des revendications précédentes, dans laquelle l'au moins une roue (165) servant à soutenir le châssis (100) sur le sol comprend une roue avant (165A) et/ou une roue arrière (165A).

6. La moissonneuse agricole (1) selon l'une quelconque des revendications précédentes, dans laquelle le capteur (50) est un capteur LIDAR, un capteur radar, un capteur à ultrasons ou une caméra comme une caméra infrarouge ou une caméra stéréoscopique.

7. La moissonneuse agricole (1) selon l'une quelconque des revendications précédentes, dans laquelle le capteur (50) est installé sur l'organe de coupe (2).

8. La moissonneuse agricole (1) selon l'une quelconque des revendications précédentes, dans laquelle la moissonneuse agricole (1) est une récolteuse-hacheuse, une moissonneuse-batteuse, une presse à balles ou une machine combinée.

9. Un procédé de commande de l'au moins un vérin de levage (600) d'une moissonneuse agricole (1) selon l'une quelconque des revendications précédentes, le procédé comprenant :
la réception d'un signal représentant la composition détectée de la surface du sol dans la zone située derrière le mécanisme de ramassage (110), et
l'actionnement de l'au moins un vérin de levage (600) afin d'ajuster une pression que l'organe de coupe (2) exerce sur le sol en fonction de la composition détectée de la surface du sol.

10. Un procédé selon la revendication 9, dans lequel la composition détectée de la surface du sol comprend un motif irrégulier de résidus de culture sur le sol, et dans lequel l'au moins un vérin de levage (600) est actionné pour diminuer la pression que l'organe de coupe (2) exerce sur le sol en fonction du motif irrégulier des résidus de culture sur le sol.

11. Un procédé selon la revendication 9, dans lequel la composition détectée de la surface du sol comprend une irrégularité, comme des traces de pneus ou une bordure, dans le sol, et dans lequel l'au moins un vérin de levage (600) est actionné pour diminuer la pression que l'organe de coupe (2) exerce sur le sol en fonction de l'irrégularité.
